# EUROPEAN PATENT APPLICATION

(11) **EP 4 748 894 A1**
(43) Date of publication of application: **27.05.2026**
(21) Application number: 25215815.9
(22) Date of filing: 14.11.2025
(51) Int. Cl.: C09D 11/38, C09D 11/10, C09D 11/322

(54) **INK, INKJET RECORDING METHOD, AND INKJET RECORDING APPARATUS**

(30) Priority: 15.11.2024 JP 2024199768
(71) Applicant: KYOCERA Document Solutions Inc., Osaka-shi, Osaka 540-8585 (JP)
(72) Inventor: FUNAKOSHI, Daichi, Osaka-shi, Osaka, 540-8585 (JP); KIDA, Yukari, Osaka-shi, Osaka, 540-8585 (JP)
(74) Representative: Viering, Jentschura & Partner mbB Patent- und Rechtsanwälte

(57) **Abstract**

An ink is an ink for non-absorbent recording media. The ink includes: a silicone surfactant; a binder; and water. The ink has a pH of 6.5 or more and 9.0 or less at 25°C. In this ink, by blending the binder, an image with high adhesion to the non-absorbent recording medium can be formed and high rubfastness in the image formed on the non-absorbent recording medium can be achieved. Further, in this ink, by blending the silicone surfactant and setting the pH at 25°C to 6.5 or more and 9.0 or less, high wet-spreadability on the non-absorbent recording medium is achieved.

## Description

### Field

The present disclosure relates to an ink, an inkjet recording method, and an inkjet recording apparatus.

### Background

Japanese Patent Application Laid-open No. 2006-249396 and Japanese Patent Application Laid-open No. 2024-062760 disclose water-based inks for forming images on recording media using inkjet recording apparatuses. Such water-based inks are desired to have high adhesion to non-absorbent recording media with low water permeability when forming images on the non-absorbent recording medium. In this regard, in the water-based ink disclosed in Japanese Patent Application Laid-open No. 2024-062760, fine particles of a urethane resin are blended as a binder in order to achieve high adhesion to non-absorbent recording media.

### Summary

An ink according to an embodiment of the present disclosure is an ink for non-absorbent recording media.

The ink includes: a silicone surfactant; a binder; and water.

The ink has a pH of 6.5 or more and 9.0 or less at 25°C.

An inkjet recording method according to an embodiment of the present disclosure forms an image on a recording surface of a non-absorbent recording medium.

The recording surface is caused to be subjected to corona treatment.

An ink that includes a silicone surfactant, a binder, and water and has a pH of 6.5 or more and 9.0 or less at 25°C is ejected onto the recording surface subjected to the corona treatment.

An inkjet recording apparatus according to an embodiment of the present disclosure is an apparatus that forms an image on a recording surface of a non-absorbent recording medium.

The inkjet recording apparatus includes: a surface treatment unit; a recording head; and a control unit.

The surface treatment unit causes the recording surface to be subjected to corona treatment.

The recording head ejects an ink that includes a silicone surfactant, a binder, and water and has a pH of 6.5 or more and 9.0 or less at 25°C onto the recording surface subjected to the corona treatment.

The control unit controls the surface treatment unit and the recording head such that the recording head ejects the ink onto the recording surface after the surface treatment unit causes the recording surface to be subjected to the corona treatment.

### Brief Description of Figures

Fig. 1 is a block diagram showing a schematic configuration of an inkjet recording apparatus according to an embodiment of the present disclosure; and
Fig. 2 is a diagram describing a method of evaluating the wet-spreadability of the ink.

### Detailed Description

Water-based inks are desired to have a certain degree of wet-spreadability on non-absorbent recording media in order to form high-quality images on the non-absorbent recording media without unevenness. Meanwhile, in water-based inks in which a binder is blended, the binder exerts the effect of rapidly fixing the ink on the non-absorbent recording medium but also exerts the effect of inhibiting wetting and spreading on the non-absorbent recording medium, and thus, the wet-spreadability on the non-absorbent recording medium tends to be insufficient.

In view of the circumstances as described above, it is an object of the present disclosure to improve the wet-spreadability on the non-absorbent recording medium of the ink using a binder.

An embodiment of the present disclosure will be described. Note that in the present disclosure, "acrylic" and "methacrylic" will be collectively referred to as "(meth)acrylic", i.e., "(meth)acrylic" includes both "acrylic" and "methacrylic".

### [Configuration of ink]

### (Schematic configuration)

An ink according to an embodiment of the present disclosure includes a pigment a, a binder b, a surfactant c, and water. The ink according to this embodiment is a water-based ink that is ejected onto a recording medium from a recording head of an inkjet recording apparatus to form an image on the recording medium. The recording medium on which an image is to be formed with the ink according to this embodiment is a non-absorbent recording medium with low ink absorption. Note that the ink according to this embodiment may be a clear ink that does not include the pigment a.

Examples of the non-absorbent recording medium include foil paper, an overhead projector (OHP) sheet, and a plastic recording medium. Examples of the plastic forming the recording medium include polyethylene terephthalate (PET), polyester, polypropylene, polyethylene, polystyrene, and polyvinyl chloride. The non-absorbent recording medium on which an image is to be formed with the ink according to this embodiment is favorably a polyethylene terephthalate film or a polypropylene film, more favorably a polyethylene terephthalate film whose surface has been modified by corona treatment or the like or a polypropylene film whose surface has been modified by corona treatment or the like.

In the ink according to this embodiment, by blending the binder b, an image with high adhesion to the non-absorbent recording medium can be formed and high rubfastness in the image formed on the non-absorbent recording medium can be achieved.

Further, in the ink according to this embodiment, by using a silicone surfactant as the surfactant c, high wet-spreadability on the non-absorbent recording medium is achieved. Further in the ink according to this embodiment, the pH at 25°C is 6.5 or more and 9.0 or less, favorably 7.5 or more and less than 8.5, from the viewpoint of sufficiently achieving the effect of the silicone surfactant.

Further, the recording surface of the non-absorbent recording medium on which an image is to be formed with the ink according to this embodiment is favorably subjected to corona treatment. On the recording surface of the non-absorbent recording medium that has been subjected to corona treatment, improvement in surface energy and polarity makes the wetting and spreading of the ink more uniform and improves the adhesion of the image. In the ink according to this embodiment, it is possible to further enhance the wet-spreadability and adhesion on the recording surface of the non-absorbent recording medium that has been subjected to corona treatment, and more effectively prevent the color unevenness and peeling of the image. The non-absorbent recording medium on which an image is to be formed with the ink according to this embodiment is more favorably a polyethylene terephthalate film that has been subjected to corona treatment.

Details of each component of the ink according to this embodiment will be described below.

### (Pigment a)

Examples of the pigment a used in the ink according to this embodiment include a yellow pigment, an orange pigment, a red pigment, a blue pigment, a purple pigment, a black pigment, and a white pigment. Examples of the yellow pigment include C.I. Pigment Yellow (74, 93, 95, 109, 110, 120, 128, 138, 139, 151, 154, 155, 173, 180, 185, and 193). Examples of the orange pigment include C.I. Pigment Orange (34, 36, 43, 61, 63, and 71). Examples of the red pigment include C.I. Pigment Red (122 and 202). Examples of the blue pigment include C.I. Pigment Blue (15, more specifically 15:3). Examples of the purple pigment include C.I. Pigment Violet (19, 23, and 33). Examples of the black pigment include C.I. Pigment Black (7). Examples of the white pigment include titanium oxide. In particular, titanium oxide that has been subjected to surface treatment is favorable because it exhibits relatively favorable dispersibility in the aqueous medium. For example, titanium oxide that has been subjected to surface treatment with silica and alumina is favorable. Further, titanium oxide that has been subjected to surface treatment with silica and alumina and then surface treatment with a silane coupling agent can also be used and is more favorable.

In the ink according to this embodiment, in the case of color inks (other than the white ink and the clear ink), the content of the pigment a is favorably 0.5 mass% or more and 11.0 mass% or less, more favorably 1.5 mass% or more and 10.0 mass% or less. In the ink according to this embodiment, in the case of the white ink, the content of the pigment a is favorably 5.0 mass% or more and 15.0 mass% or less.

### (Binder b)

In the ink according to this embodiment, the binder b is blended in order to improve the adhesion of the image on the non-absorbent recording medium and the rubfastness of the image formed on the non-absorbent recording medium. The binder b is fine particles formed of a resin. Examples of the resin forming the binder b include a urethane resin, a polyolefin resin, a (meth)acrylic resin, a styrene resin, a polyvinyl resin, a polyester resin, an amino resin, an epoxy resin, a polyether resin, a polyamide resin, a phenolic resin, a silicone resin, a fluoropolymer, and a copolymer including a monomer of these resins. In the ink according to this embodiment, it is favorable to form the binder b with at least one of a urethane resin, a polyolefin resin, or an acrylic resin, in order to more effectively achieve the above effect of the binder b.

In the ink according to this embodiment, the content of the binder b is favorably 3 mass% or more from the viewpoint of achieving high adhesion of the image on the recording medium and high rubfastness of the image formed on the non-absorbent recording medium. Further, in the ink according to this embodiment, the content of the binder b is favorably 20 mass% or less from the viewpoint of achieving a high ejection property from the recording head, or the like.

### (Surfactant c)

The surfactant c blended in the ink according to this embodiment is a silicone surfactant. The silicone surfactant is a surfactant including a silicone compound. The silicone surfactant has a strong effect of reducing the surface tension of the ink. In the ink according to this embodiment, by setting the pH at 25°C to 6.5 or more and 9.0 or less, the effect of reducing the surface tension of the ink by the silicone surfactant is effectively achieved and high wet-spreadability on the non-absorbent recording medium is achieved even with the configuration using the binder b.

In the ink according to this embodiment, the content of the surfactant c is favorably 0.03 mass% or more from the viewpoint of achieving high wet-spreadability on the non-absorbent recording medium. Further, in the ink according to this embodiment, the content of the surfactant c is favorably 0.5 mass% or less from the viewpoint of the ejection property.

### (Water)

In the ink according to this embodiment, ion exchanged water, purified water, distilled water, or the like can be used as water. In the ink according to this embodiment, the content of water is favorably 50 mass% or more and 80 mass% or less from the viewpoints of dryness and ejection reliability.

### (Other components)

In the ink according to this embodiment, components other than the above may be blended as necessary. For example, a dispersant that has the effect of enhancing the dispersibility of the pigment a in the solvent may be blended in the ink according to this embodiment. As the dispersant, a pigment dispersion resin, a surfactant, or the like can be used.

The pigment dispersion resin is fine particles of a resin and is adsorbed on the surface of the pigment a to enhance the dispersibility of the pigment a in the solvent. As the pigment dispersion resin, a styrene-(meth)acrylic resin is favorable. The styrene-(meth)acrylic resin includes a repeating unit derived from at least one monomer of (meth)acrylic acid alkyl ester and (meth)acrylic acid and a styrene unit. Examples of the (meth)acrylic acid alkyl ester include methyl (meth)acrylate, ethyl (meth)acrylate, propyl (meth)acrylate, and butyl (meth)acrylate. As the styrene-(meth)acrylic resin, a copolymer of styrene, methyl methacrylate, methacrylic acid, and butyl acrylate is favorable.

In the ink in which the pigment dispersion resin is blended, the pigment a and the pigment dispersion resin integrally form a pigment dispersion (pigment particle). The pigment dispersion includes, for example, a core that includes a pigment and a pigment dispersion resin that coats the core. The pigment dispersion resin may be partially dispersed in the solvent. In the pigment dispersion including the pigment a of the color other than white, the volume median diameter is favorably 30 nm or more and 200 nm or less, more favorably 70 nm or more and 130 nm or less, from the viewpoint of optimizing the color density, hue, and stability. Further, in the pigment dispersion including the white pigment a, the volume median diameter is favorably 100 nm or more and 500 nm or less, more favorably 150 nm or more and 400 nm or less, from the viewpoint of optimizing the color density, hue, and stability.

The surfactant blended as a dispersant is blended separately from the surfactant c, and reduces the interfacial tension between the pigment a and the solvent, thereby enhancing the dispersibility of the pigment a in the solvent. As such a surfactant, for example, a nonionic surfactant or an anionic surfactant can be used.

Further, in addition to the dispersant, various additives such as a water-soluble organic solvent, a dissolution stabilizer, an anti-drying agent, an antioxidant, a viscosity adjustor, a pH adjuster, a neutralizer, and an antifungal agent may be blended as necessary in the ink according to this embodiment.

### [Inkjet recording method]

An inkjet recording method according to this embodiment is a method of forming an image with the ink according to this embodiment for the recording surface of a non-absorbent recording medium that has been subjected to no corona treatment. In the inkjet recording method according to this embodiment, corona treatment is applied to the recording surface of the non-absorbent recording medium, and then, the ink according to this embodiment is ejected onto the recording surface of the non-absorbent recording medium that has been subjected to corona treatment to form an image. In the inkjet recording method according to this embodiment, higher wet-spreadability of the ink according to this embodiment on the recording surface of the non-absorbent recording medium and higher adhesion of the image formed with the ink according to this embodiment to the recording surface of the non-absorbent recording medium can be achieved.

### [Inkjet recording apparatus]

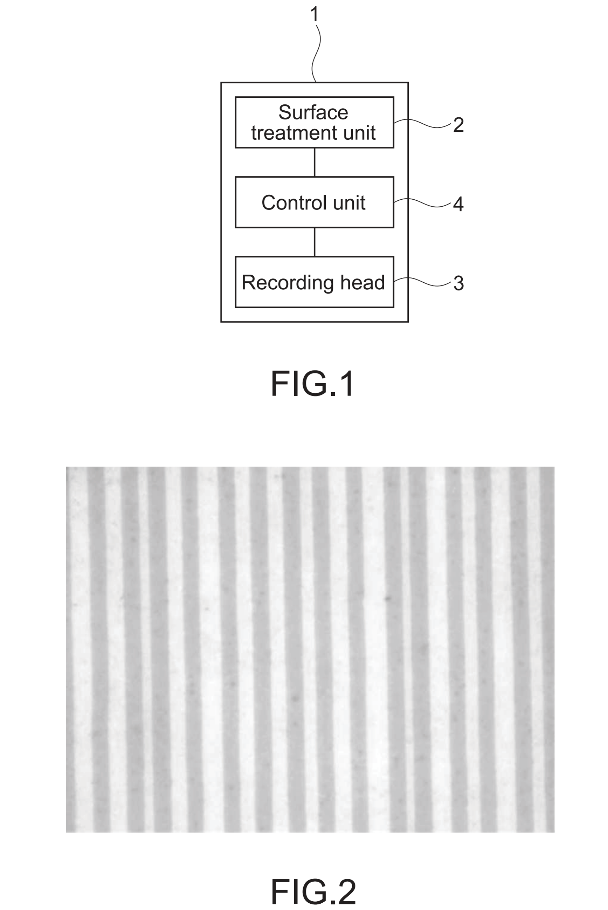

An inkjet recording apparatus 1 according to this embodiment is configured to be capable of implementing the inkjet recording method according to this embodiment. Fig. 1 is a block diagram showing a schematic configuration of the inkjet recording apparatus 1. The inkjet recording apparatus 1 includes a surface treatment unit 2, a recording head 3, and a control unit 4.

The surface treatment unit 2 applies corona treatment to the recording surface of the non-absorbent recording medium. The recording head 3 ejects the ink according to this embodiment onto the recording surface of the non-absorbent recording medium. The control unit 4 controls the surface treatment unit 2 and the recording head 3 such that the recording head 3 ejects the ink according to this embodiment onto the recording surface of the non-absorbent recording medium after the surface treatment unit 2 applies corona treatment to the recording surface of the non-absorbent recording medium.

### [Examples and Comparative Examples]

As Examples and Comparative Examples of the present disclosure, inks were prepared and evaluated.

### (Preparation of ink)

First, a pigment dispersion liquid including the pigment a dispersed in water was prepared. 75 g of a pigment dispersion resin ("SOLSPERSE (registered trademark) W100" manufactured by The Lubrizol Corporation, non-volatile content: 40 mass%) was diluted with 425 g of ion exchanged water, 500 g of a pigment (C.I. Pigment Blue 15:3) was added thereto, and then, the mixture was premixed for 1 hour at a rotational speed of 5000 rpm using a homodisper. After that, dispersion treatment was performed thereon using a bead mill (manufactured by NIPPON COKE & ENGINEERING. CO., LTD.) to obtain a pigment dispersion liquid. Note that in the dispersion treatment, the vessel was filled with zirconia beads (0.2 mmφ) at a filling rate of 80% by volume. Note that the pigment a and the pigment dispersion resin included in the pigment dispersion liquid constitutes the component of the pigment dispersion in each ink. Further, the water included in the pigment dispersion liquid constitutes the component of water in each ink.

Next, inks according to Examples and Comparative Examples were prepared. The pigment dispersion liquid, the binder b, the surfactant c, a water-soluble organic solvent d, and water were weighed and added to a beaker, and the content of the beaker was stirred at a rotational speed of 400 rpm using a stirrer ("Three-One Motor BL-600" manufactured by Shinto Scientific Co., Ltd.) and mixed uniformly, thereby obtaining an ink. The obtained ink was filtered using a filter (pore size of 5 µm) to remove foreign substances and coarse particles contained in the mixed solution.

In the Examples and Comparative Examples, binders b1 to b3 shown in Table 1 were used as the binder b, surfactants c1 to c4 shown in Table 2 were used as the surfactant c, and water-soluble organic solvents d1 and d2 shown in Table 3 were used as the water-soluble organic solvent d. The binder b1 includes a urethane resin, the binder b2 includes a polyolefin resin, and the binder b3 includes an acrylic resin. The surfactants c1 and c2 are each a silicone surfactant, and the surfactants c3 and c4 are not silicone surfactants. Note that the products shown as the binders b1 to b3 are emulsions in which the binders b1 to b3 are dispersed in water. The water included in this emulsion constitutes the component of water in each ink.

**(Table 1)**

| Binder | Product name | Manufacturer |
|---|---|---|
| b1 | SUPERFLEX 130 | DKS Co. Ltd. |
| b2 | Arrowbase DA-1010 | UNITIKA LTD. |
| b3 | Mowinyl 6969D | Japan Coating Resin Co., Ltd. |

**(Table 2)**

| Surfactant | Product name | Manufacturer |
|---|---|---|
| c1 | SILFACE SAG-002 | Nissin Chemical Co., Ltd. |
| c2 | SILFACE SAG-503A | Nissin Chemical Co., Ltd. |
| c3 | EXP4123 | Nissin Chemical Co., Ltd. |
| c4 | OLFINE E1010 | Nissin Chemical Co., Ltd. |

**(Table 3)**

| Water-soluble organic solvent | Type |
|---|---|
| d1 | Propylene glycol |
| d2 | Butyl triglycol |

### (Evaluation method)

For the inks according to Examples and Comparative Examples, the rubfastness and adhesion of the image, and wet-spreadability were evaluated.

### ·Method of evaluating rubfastness of image

Each ink was applied onto a non-absorbent recording medium (PET film "FE2001" manufactured by FUTAMURA CHEMICAL CO.,LTD.) using a bar coater(No. 2), and then dried at 80°C for 2 minutes to form an image having a thickness of 6 µm. The image formed on the recording medium was rubbed once with a weight of 1000 g. A peeling rate of the image, which is the ratio of the region where the image was peeled off to the region rubbed with the weight, was visually observed. Using the peeling rate of each image, evaluation was performed in accordance with the following criteria A to D. Inks with the evaluation of A or B for the rubfastness of the image are evaluated to "Pass", and inks with the evaluation of C or D are evaluated to "Fail."
A: 0%
B: exceeding 0% and 5% or less
C: exceeding 5% and 10% or less
D: exceeding 10%

### ·Method of evaluating adhesion of image

Each ink was applied onto a non-absorbent recording medium (PET film "FE2001" manufactured by FUTAMURA CHEMICAL CO.,LTD.) using a bar coater (No. 2), and then dried at 80°C for 2 minutes to form an image having a thickness of 6 µm. The image formed on the recording medium was cut with a cutter into a 5 × 5 grid pattern at 1 mm intervals, and a tape peeling test was carried out using a cross-cut method. The number of peeled squares of the 25 image squares in the grid pattern after the tape peeling test was counted. Using the number of peeled squares in each image, evaluation was performed in accordance with the following criteria A to D. Inks with the evaluation of A or B for the adhesion of the image are evaluated to "Pass", and inks with the evaluation C or D are evaluated to "Fail".
A: 0
B: 1 or more and 3 or less
C: 4 or more and 6 or less
D: 7 or more

### ·Wet-spreadability

Each ink was used to form an image of a pattern with straight lines arranged as shown in Fig. 2 on a non-absorbent recording medium (PET film "FE2001" manufactured by FUTAMURA CHEMICAL CO.,LTD.) using a tester, and the image was dried by being held in a hot air dryer at 80°C for 120 seconds. As the tester used for evaluation, a tester on which a piezoelectric inkjet head that ejects a pigment ink and a pre-treatment liquid (KJ4B-1200, manufactured by KYOCERA Corporation) was mounted was used. Printing was performed with the following settings of the tester: a head applied voltage of 20 V, a drive frequency of 18 kHz, an ejection droplet volume of 3 pl, a print head resolution of 1200 dpi, and the number of times of flushing before ejection of 100. For the image formed on the non-absorbent recording medium with each ink, the widths of 14 lines were measured and the average value of the widths of 14 lines was calculated. Using the average value of the widths of the lines in each image and the presence or absence of liquid droplet coalescence, evaluation was performed in accordance with the following criteria A to C. Inks with the evaluation of A or B for the wet-spreadability of the image are evaluated to "Pass", and inks with the evaluation of C are evaluated to "Fail".
A: No liquid droplet coalescence and the average value of the widths of the lines of 70 µm or more
B: No liquid droplet coalescence and the average value of the widths of the lines of 50 µm or more and less than 70 µm
C: Presence of liquid droplet coalescence or the average value of the widths of the lines of less than 50 µm

### (Examples 1 to 7)

In Examples 1 to 6, the types and amounts of binder b and surfactant c were varied to prepare inks by the above method. Further, in Example 7, a clear ink was prepared without using the pigment a and the pigment dispersion. Table 4 shows the compositions of the inks according to Examples 1 to 7. Note that in all of the inks according to Examples 1 to 7, the type and amount of water-soluble organic solvent d were common.

**(Table 4)**

| | | | Example | | | | | | |
|---|---|---|---|---|---|---|---|---|---|
| | | | 1 | 2 | 3 | 4 | 5 | 6 | 7 |
| Content (mass%) | Pigment dispersion | | 5 | 5 | 5 | 5 | 5 | 5 | |
| | Binder | b1 | 3 | | | 3 | 3 | 3 | |
| | | b2 | | 3 | | | | | 10 |
| | | b3 | | | 3 | | | | |
| | Surfactant | c1 | 0.04 | 0.04 | 0.04 | | 0.04 | | 0.1 |
| | | c2 | | | | 0.04 | | 0.04 | |
| | | c3 | | | | | | | |
| | | c4 | | | | | | | |
| | Water-soluble organic solvent | d1 | 25 | 25 | 25 | 25 | 25 | 25 | 25 |
| | | d2 | 8 | 8 | 8 | 8 | 8 | 8 | 8 |
| | Water | | 58.96 | 58.96 | 58.96 | 58.96 | 58.96 | 58.96 | 56.90 |
| pH | | | 7.8 | 7.8 | 7.8 | 7.8 | 8.4 | 9.0 | 7.7 |

For the inks according to Examples 1 to 7, the rubfastness and adhesion of the image, and wet-spreadability were evaluated. Table 5 shows the evaluation results of the rubfastness and adhesion of the image, and wet-spreadability for the inks according to Examples 1 to 7. In all of the inks according to Examples 1 to 7, the rubfastness and adhesion of the image, and wet-spreadability were evaluated to "Pass".

**(Table 5)**

| | | Evaluation result | | |
|---|---|---|---|---|
| | | Rubfastness | Adhesion | Wet-spreadability |
| Example | 1 | B | B | A |
| | 2 | B | B | A |
| | 3 | B | B | A |
| | 4 | B | B | A |
| | 5 | B | B | B |
| | 6 | B | B | B |
| | 7 | B | B | A |

### (Examples 8 and 9)

In Examples 8 and 9, the ink according to Example 1 was used to evaluate the rubfastness and adhesion of the image, and wet-spreadability by changing the type of non-absorbent recording medium. Specifically, in Example 8, a PET film that had been subjected to corona treatment was used as a non-absorbent recording medium. In Example 9, a biaxially oriented polypropylene (OPP) film that had been subjected to corona treatment was used as a non-absorbent recording medium.

Table 6 shows the evaluation results of the rubfastness and adhesion of the image, and wet-spreadability for Examples 8 and 9. In all of the inks according to Examples 8 and 9, the rubfastness and adhesion of the image, and wet-spreadability were evaluated to "Pass". In particular, In Example 8 using a PET film that had been subjected to corona treatment, particularly favorable results for the rubfastness and adhesion were achieved.

**(Table 6)**

| | | Evaluation result | | |
|---|---|---|---|---|
| | | Rubfastness | Adhesion | Wet-spreadability |
| Example | 8 | A | A | A |
| | 9 | B | B | B |

### (Comparative Examples 1 to 4)

In Comparative Examples 1 to 4, the configurations of the binder b and the surfactant c were varied from those in the above Examples to prepare inks by the above method. Table 7 shows the compositions of the inks according to Comparative Examples 1 to 4. Note that in all of the inks according to Comparative Examples 1 to 4, the type and amount of water-soluble organic solvent d were common to those in the inks according to Examples 1 to 6. The ink according to Comparative Example 1 is different from the inks according to the above Examples in that the pH at 25°C exceeds 9.0. The ink according to Comparative Example 2 is different from the inks according to the above Examples in that the binder b is not blended. The inks according to Comparative Examples 3 and 4 are different from the inks according to the above Examples in that no silicone surfactant is blended and a surfactant other than the silicone surfactant is used instead.

**(Table 7)**

| | | | Comparative Example | | | |
|---|---|---|---|---|---|---|
| | | | 1 | 2 | 3 | 4 |
| Content (mass%) | Pigment dispersion | | 5 | 5 | 5 | 5 |
| | Binder | b1 | 3 | | 3 | 3 |
| | | b2 | | | | |
| | | b3 | | | | |
| | Surfactant | c1 | 0.04 | 0.04 | | |
| | | c2 | | | | |
| | | c3 | | | 0.04 | |
| | | c4 | | | | 0.04 |
| | Water-soluble organic solvent | d1 | 25 | 25 | 25 | 25 |
| | | d2 | 8 | 8 | 8 | 8 |
| | Water | | 58.96 | 61.96 | 58.96 | 58.96 |
| pH | | | 9.4 | 7.8 | 7.8 | 7.8 |

For the inks according to Comparative Examples 1 to 4, the rubfastness and adhesion of the image, and wet-spreadability were evaluated. Table 8 shows the evaluation results of the rubfastness and adhesion of the image, and wet-spreadability for the inks according to Comparative Examples 1 to 4. In the ink according to Comparative Example 1, the wet-spreadability was evaluated to "Fail". This is presumably because in the ink according to Comparative Example 1 in which the pH at 25°C exceeds 9.0, the effect of reducing the surface tension by the surfactant c could not be sufficiently achieved. In the ink according to Comparative Example 2, the rubfastness of the image, and adhesion were evaluated to "Fail". This is presumably because in the ink according to Comparative Example 2 in which the binder b is not included, the adhesion strength of the image to the recording medium was insufficient. In the inks according to Comparative Examples 3 and 4, the wet-spreadability was evaluated to "Fail". This is presumably because in the inks according to Comparative Examples 3 and 4 in which no silicone surfactant is blended, the effect of reducing the surface tension could not be sufficiently achieved.

**(Table 8)**

| | | Evaluation result | | |
|---|---|---|---|---|
| | | Rubfastness | Adhesion | Wet-spreadability |
| Comparative Example | 1 | B | B | C |
| | 2 | D | D | A |
| | 3 | B | B | C |
| | 4 | B | B | C |

## Claims

1. An ink for non-absorbent recording media, comprising:
a silicone surfactant;
a binder; and
water,
the ink having a pH of 6.5 or more and 9.0 or less at 25°C.

2. The ink according to claim 1, wherein
the binder includes at least one of a urethane resin, a polyolefin resin, or an acrylic resin.

3. The ink according to claim 1 or 2, wherein
the pH at 25°C is less than 8.5.

4. The ink according to claim 1 or 2, wherein
the non-absorbent recording media are polyethylene terephthalate films or polypropylene films.

5. An inkjet recording method of forming an image on a recording surface of a non-absorbent recording medium, comprising:
causing the recording surface to be subjected to corona treatment; and
ejecting an ink that includes a silicone surfactant, a binder, and water and has a pH of 6.5 or more and 9.0 or less at 25°C onto the recording surface subjected to the corona treatment.

6. The inkjet recording method according to claim 5, wherein
the non-absorbent recording medium is a polyethylene terephthalate film or a polypropylene film.

7. An inkjet recording apparatus (1) that forms an image on a recording surface of a non-absorbent recording medium, comprising:
a surface treatment unit (2) that causes the recording surface to be subjected to corona treatment;
a recording head (3) that ejects an ink that includes a silicone surfactant, a binder, and water and has a pH of 6.5 or more and 9.0 or less at 25°C onto the recording surface subjected to the corona treatment; and
a control unit (4) that controls the surface treatment unit (2) and the recording head (3) such that the recording head (3) ejects the ink onto the recording surface after the surface treatment unit (2) causes the recording surface to be subjected to the corona treatment.

8. The inkjet recording apparatus (1) according to claim 7, wherein
the non-absorbent recording medium is a polyethylene terephthalate film or a polypropylene film.
